# EUROPÄISCHE PATENTANMELDUNG

(11) **EP 1 420 313 A2**
(43) Veröffentlichungstag der Anmeldung: **19.05.2004**
(21) Anmeldenummer: 03026037.6
(22) Anmeldetag: 12.11.2003
(51) Int. Cl.: G05B 19/418

(54) **Verfahren, Vorrichtung, computerlesbares Speichermedium und Computerprogramm-Element zum Überwachen eines Herstellungsprozesses einer Mehrzahl von physikalischen Objekten**

(30) Priorität: 12.11.2002 DE 10252608
(71) Anmelder: Infineon Technologies AG, 81669 München (DE)
(72) Erfinder: Märitz, Jörn, 93152 Zeiler-Nittendorf (DE)
(74) Vertreter: Viering, Jentschura & Partner

(57) **Zusammenfassung**

Verfahren und Vorrichtung zum Überwachen eines Herstellungsprozesses einer Mehrzahl von physikalische Objekten. Ein Verfahren zum Überwachen eines Herstellungsprozesses einer Mehrzahl von physikalischen Objekten, bei dem eine statistische Analyse unter Verwenden von Werten von mindestens einem Prozessparameter des Herstellungsprozesses des physikalischen Objektes vorgenommen wird. Ferner werden bei dem Verfahren als Ergebnis der statistischen Analyse physikalische Objekte, wenn sie einem vorgegebenen Auswahlkriterium nicht genügen, derart gekennzeichnet, dass die zugehörigen physikalischen Objekte Sonderbehandlungen zuzuführen sind.

## Beschreibung

Die Erfindung betrifft ein Verfahren und eine Vorrichtung zum Überwachen von Produktqualitätsdaten in einem Herstellungsprozess.

Bei der Herstellung von Wafern mit hochintegrierten Halbleiterchips werden insbesondere durch die immer weiter steigende Miniaturisierung der Strukturen auf dem Halbleiterchip immer höhere Anforderungen an die für die Herstellung der Halbleiterchips verwendeten Fertigungsanlagen und Herstellungsprozesse auftreten. Die Stabilität und Reproduzierbarkeit sowohl der Fertigungsanlagen als auch der Herstellungsprozesse beeinflussen maßgeblich die Ausbeute und Produktivität im Rahmen der Halbleiterchip-Fertigung. Schon kleine Abweichungen von einem Soll-Verhalten einer Chip-Fertigungsanlage im Rahmen der Produktion können zu einer erheblichen Verschlechterung der Ausbeute, das heißt zu einer erheblichen Erhöhung der Fehlerrate bei den hergestellten Halbleiterchips führen.

Für ein Qualitätsmanagement, d.h. um die Qualität des Herstellungsprozesses und die Qualität der Wafer sicherzustellen, müssen die fertig prozessierten Wafer Testmessungen unterzogen werden. Um den Herstellungsprozess vollständig zu überwachen und zu beurteilen, wäre es nötig jeden einzelnen Wafer, welcher mittels des Herstellungsverfahrens produziert wurde, zu testen und die Qualität des Wafers anschließend zu beurteilen. Dies ist jedoch aufgrund der zeit- und kostenintensiven Testmessungen zum Bestimmen der Qualität der Wafer nicht möglich.

Zum Qualitätsmanagement wird häufig das so genannte "Statistical Process Control" (SPC) Verfahren verwendet. Gemäß diesem Verfahren werden stichprobenhaft Wafer mittels Testmessungen auf ihre Qualität hin geprüft und anhand der Ergebnisse der stichprobenhaften Untersuchungen auf die Produktqualität gesamter Lose eines Herstellungsverfahrens geschlossen. Die Stichproben werden hierbei zufällig aus den Wafern eines Loses gezogen. Mittels dieses SPC-Verfahrens wird die durchschnittliche Qualität der Wafer eines Loses oder eines Herstellungsverfahrens bestimmt.

Im Qualitätsmanagement ist es neben dem Bestimmen der durchschnittlichen Qualität der Wafer eines Loses auch nötig Wafer, welche eine geringe Qualität aufweisen und somit einem vorgegebenen Qualitätskriterium nicht genügen, auszusondern und einer Sonderbehandlung, d.h. einer Sondermessung und einem eventuellen Nacharbeiten, zuzuführen. Hierzu müssen diejenigen Wafer eines Loses bestimmt werden, bei welchen die Gefahr besteht, dass sie dem vorgegebenen Qualitätskriterium nicht genügen, weil bei ihrer Prozessierung im Herstellungsverfahren Fehler aufgetreten sind. Hierzu wird häufig das so genannte "Fault Detection and Classification" (FDC) Verfahren verwendet. Mittels dieses Verfahrens werden Prozessfehler, d.h. Fehler, welche in dem Herstellungsprozess aufgetreten sind, erfasst. Die entsprechenden Fehler werden in der Anmeldung als FDC-Fehler bezeichnet.

Auch sollte das Erkennen von Wafer, welche dem Qualitätskriterium nicht genügen möglichst früh und sicher im Herstellungsprozess vorgenommen werden, um ein eventuelles Problem in der Herstellung möglichst früh zu bemerken. Zusätzlich ist es wünschenswert, dass ein Wafer, welcher fehlerhaft prozessiert wurde, nicht ohne Sonderbehandlung in dem gewöhnlichen Prozessablauf verbleibt, sondern diesem entzogen wird.

Dies wird gemäß dem Stand der Technik durch einen Kontrollvorarbeiter oder Ingenieur sichergestellt, welcher anhand einer Vielzahl von von ihm beobachteten Parametern entscheidet, welcher Wafer einer Sonderbehandlung unterzogen werden soll und was mit dem entsprechenden Wafer weiter geschehen soll. Der Kontrollvorarbeiter muss hierzu innerhalb einer kurzen Zeitspanne nach der Bereitstellung der Parameter des Herstellungsprozesses reagieren und eine entsprechende Sondermessung vornehmen. Dabei ist aber nicht sichergestellt, ob die Vielzahl von Parametern den Kontrollplatz rechtzeitig für die Einleitung einer eventuell benötigten Sondermessung erreichen. Dies kann dazu führen, dass Wafer, welche vor einem weiteren Prozessieren eigentlich einer Sonderbehandlung zugeführt werden sollten, ohne Sondermessung weiter prozessiert werden. Auch kann es zu einem verspäteten Erkennen von Fehlern im Herstellungsprozess und damit zu einem Ansteigen der Produktionskosten kommen.

Aus [1] ist ein Qualitätsverwaltungssystem bekannt, bei dem eine Datenbearbeitungseinheit einen von einer Fehlerinspektionsvorrichtung gemessenen Datenwert, wie zum Beispiel Anzahl der Fehler, eine Fläche von jedem Fehler, einen äquivalenten Durchmesser der Fläche usw. derart bearbeitet, dass Indexwerte als bearbeitete Datenwerte errechnet werden, anhand derer eine Beurteilungseinheit beurteilt, ob oder ob nicht eine weitere Prüfung durchgeführt werden soll.

Der Erfindung liegt das Problem zugrunde, die Ausbeute des Herstellungsprozesses für Wafer zu vergrößern und die Qualität der Wafer zu verbessern.

Das Problem wird durch das Verfahren und die Vorrichtung zum Überwachen eines Herstellungsprozesses mit den Merkmalen gemäß den unabhängigen Patentansprüchen gelöst.

Bei einem Verfahren zum Überwachen eines Herstellungsprozesses einer Mehrzahl von physikalischen Objekten, wird eine Analyse unter Verwenden von Werten von mindestens einem Prozessparameter des Herstellungsprozesses des physikalischen Objektes vorgenommen. Als Ergebnis der Analyse werden physikalische Objekte, wenn sie einem vorgegebenen Auswahlkriterium nicht genügen, derart gekennzeichnet, dass die zugehörigen physikalischen Objekte Sonderbehandlungen zugeführt werden können. D.h. anhand des Auswahlkriteriums werden die jeweiligen physikalischen Objekte gekennzeichnet werden, an welchen vor einem weiteren Prozessieren eine Sondermessung durchgeführt werden sollte.

Unter einem Prozessparameter ist in diesem Zusammenhang ein Parameter eines Herstellungsprozesses eines physikalischen Objektes zu verstehen. Hierunter fallen zum Beispiel bei der Herstellung eines Wafers die Dejustierung, d.h. die Ungenauigkeit der Positionierung eines Wafers in einer Maschine oder anders ausgedrückt eine Abweichung einer tatsächlichen Position des Wafers in der Maschine von der Sollposition des Wafers in der Maschine, innerhalb eines Positionierungsschrittes, die Temperatur während eines Prozessschrittes, der Gasfluss während eines Prozessschrittes, die Zeitdauer eines Prozessschrittes, der während eines Prozessschrittes herrschende Druck, allgemein alle Ventilstellungen, eine Waferträger-Geschwindigkeit und ein Waferträger-Andruck. Andere Prozessparameter in einer Lithographie sind zum Beispiel verschiedene Justagegrößen, eine Fokussierung oder eine Dosis. Diese Prozessparameter werden ständig während des Herstellungsprozesses aufgenommen und stehen für eine Analyse bereit.

Die Analyse kann eine statistische Analyse sein. Sie kann aber auch Einzelwerte untersuchen oder einfache Statements, z.B. ob ein physikalisches Objekt eine bestimmte Anforderung genügt oder nicht genügt (good - no good), auswerten.

Die Vorrichtung zum Überwachen eines Herstellungsprozesses eines physikalischen Objektes weist mindestens einen Prozessor auf, der so eingerichtet ist, dass die oben beschriebenen Verfahrensschritte durchgeführt werden können.

In einem computerlesbaren Speichermedium ist ein Computerprogramm zum Überwachen eines Herstellungsprozesses eines physikalischen Objektes gespeichert, welches Computerprogramm, wenn es von einem Prozessor ausgeführt wird, die oben beschriebenen Verfahrensschritte aufweist.

Ein Programm-Element zum Überwachen eines Herstellungsprozesses eines physikalischen Objektes, weist die oben beschriebenen Verfahrensschritte auf, wenn es von einem Prozessor ausgeführt wird.

Die Erfindung kann sowohl mittels eines Computerprogramms, d.h. einer Software, als auch mittels einer oder mehrerer spezieller elektrischer Schaltungen, d.h. in Hardware oder in beliebig hybrider Form, d.h. mittels Software-Komponenten und Hardware-Komponenten, realisiert werden.

Die Erfindung weist den Vorteil auf, dass mittels der Analyse der Prozessdaten ein Auswahlkriterium zur Verfügung gestellt wird, mittels welchem bestimmt werden kann, welche physikalischen Objekte einer Mehrzahl von physikalischen Objekten gekennzeichnet werden, so dass sie einer Sonderbehandlung zugeführt werden können. Die Auswahl der physikalischen Objekte, welche einer Sonderbehandlung zugeführt werden müssen erfolgt somit nicht mehr durch einen Kontrollvorarbeiter oder einen Ingenieur sondern automatisch. Hierdurch wird die Möglichkeit, dass eine Nachricht des FDC-Verfahrens über ein fehlerhaft prozessiertes physikalische Objekt zu spät bei der entsprechenden Stelle ankommt, verhindert. Mittels des erfindungsgemäßen Verfahrens ist auch sichergestellt, dass innerhalb einer vorgegebenen Zeitspanne auf Informationen eines FDC-Verfahrens, d.h. Informationen über Prozessierungsfehler im Herstellungsprozess, reagiert werden kann. Dies ist gemäß dem Stand der Technik nicht möglich.

Bevorzugte Weiterbildungen der Erfindung ergeben sich aus den abhängigen Ansprüchen. Die weiteren Ausgestaltungen der Erfindung betreffen das Verfahren und die Vorrichtung, zum Überprüfen des Herstellungsprozesses eines physikalischen Objektes, das computerlesbare Speichermedium, in dem ein Programm zum Überwachen eines Herstellungsprozesses einer Mehrzahl von physikalischen Objekten gespeichert ist, und das Programm-Element zum Überwachen eines Herstellungsprozesses einer Mehrzahl von physikalischen Objekten.

Vorzugsweise ist das physikalische Objekt ein Wafer.

Insbesondere bei der Waferherstellung mit ihrer extrem hohen Zahl von Prozessschritten mit sehr hohen Anforderungen an die Genauigkeit der Einstellung der Prozessparameter eignet sich die Erfindung gut, da in diesem Bereich somit erstmals eine automatisierte verbesserte Qualitätskontrolle auf einfache Weise realisiert ist.

In einer bevorzugten Weiterbildung ist die Analyse eine statistische Analyse.

Ferner vorzugsweise werden bei dem erfindungsgemäßen Verfahren die Werte des mindestens einen Prozessparameters beim Herstellen des physikalischen Objektes gemessen.

Gemäß einer Ausgestaltung wird mindestens ein gekennzeichnetes physikalischen Objekt einer Sondermessung unterzogen.

Gemäß einer Weiterbildung ist die Sondermessung eine Messung zum Überprüfen der Qualität des gekennzeichneten physikalischen Objektes.

Die nicht gekennzeichneten physikalischen Objekte können gemäß dem Herstellungsprozess weiterbehandelt werden, ohne dass sie der Sondermessung zugeführt werden.

Vorzugsweise ist das Auswahlkriterium ein Qualitätsmerkmal des Herstellungsprozesses, d.h. ein Auswahlkriterium, welches über die Einhaltung bestimmter Prozessbedingungen und somit über die Qualität des durchgeführten Herstellungsprozesses beschreibt. gibt.

In einer Weiterbildung ist das Nicht-Genügen des Auswahlkriteriums dann erfüllt, wenn ein Wert des mindestens einen Prozessparameters einen vorgegebenen Grenzwert über- oder unterschreitet, d.h. das physikalische Objekt wird dann gekennzeichnet, wenn ein unterer Schwellenwert (Grenzwert) unterschritten oder ein oberer Schwellenwert überschritten wird. Wobei die Schwellenwerte vorzugsweise als relative Schwellenwerte, d.h. die Abweichung darf nicht größer als ein vorgegebener prozentualer Wert des Mittelwertes sein, oder vorzugsweise als absolute Schwellenwerte, d.h. es wird ein fester vorgegebener Schwellenwert angegeben, welcher nicht über- bzw. unterschritten werden darf, angegeben werden.

Somit ist es erfindungsgemäß möglich, das FDC-Verfahren und das Verfahren zum Durchführen von Sonderbehandlungen zu einem gemeinsamen automatisierten Verfahren zusammenzuführen. Es ist im Gegensatz zum Stand der Technik vorgesehen, auf im FDC bemerkte Prozessfehler in hinreichender Zeit und mit der notwendigen Sicherheit zu reagieren, d.h. eine Sondermessung und eine eventuelle Nachbearbeitung des Objektes, insbesondere des Wafers, durchzuführen. Ferner wird durch das erfindungsgemäße Verfahren sichergestellt, dass die Nachricht über einen aufgetretenen Prozessierungsfehler rechtzeitig den Kontrollplatz erreicht, dass die Ergebnisse der Sondermessungen nicht in das normale SPC-System eingehen und dass das Los an Wafern, bei welchem ein Prozessierungsfehler aufgetreten ist, nicht durch das SPC-Verfahren als Los gekennzeichnet wird, welches an Messoperationen zum Testen in eine nächste Operation, d.h. Verfahrenschritt des Herstellungsverfahrens, gebucht wird. Die Erfindung schafft einen Automatismus, mittels welchem Regeln des FDC-Verfahrens und der Stichprobenauswahl miteinander verknüpft werden. In Ausführungsbeispielen der Erfindung ist mittels eines Regelwerkes sichergestellt, dass zwei Aspekte, welche bei dem weiteren Behandeln der Lose mit Prozessierungsfehlern zu berücksichtigen sind, erfüllt werden. Einerseits verbleiben solche Lose nicht an den Messoperationen vorbei im normalen Herstellungsverfahren, wenn keine SPC-Messung durchgeführt werden soll, sondern werden zu Sondermessungen angemeldet. Andererseits wird sichergestellt, dass wenn von dem betreffenden Los eine Stichprobe für das SPC-Verfahren untersucht werden soll, kein Wafer aus diesen Los für die SPC-Messung vorgeschlagen wird, bei dem ein FDC-Fehler aufgetreten ist, und die Wafer bei denen ein FDC-Fehler aufgetreten ist, werden zur Sondermessung angemeldet. So ist gesichert, dass keine Ausreißer, d.h. Wafer, bei denen Prozessierungsfehler (FDC-Fehler) aufgetreten sind, in das SPC-Qualitätsmanagement eingehen und dass keine Wafer mit FDC-Fehlern zur nächsten Operation (Herstellungsprozessschritt) gelangen, ohne zumindest einer Sondermessung unterzogen worden zu sein.

Die Erfindung schafft ein Messkonzept, d.h. ein Konzept für alle Messungen (SPC-Messungen und Sondermessungen), welches mit dem FDC-Verfahren und den daraus erhaltenen Informationen über eventuell aufgetretene FDC-Fehler verknüpft ist.

Als Vorteile des erfindungsgemäßen Verfahrens ergeben sich somit eine Verbesserung des Qualitätsmanagements und eine verbesserte Produktkontrolle mittels einer höheren Automatisierung der Stichprobenauswahl

Auch wenn die Erfindung im Weiteren an dem Beispiel eines Überwachungsverfahrens eines Wafer-Herstellungsverfahrens näher erläutert wird, ist darauf hinzuweisen, dass die Erfindung nicht darauf beschränkt ist, sondern in allen Überwachungsverfahren für Herstellungsverfahren, bei welchen im Herstellungsverfahren Prozessparameter aufgenommen werden eingesetzt werden kann, beispielsweise auch in der Pharma-Industrie bei dem Herstellen von pharmazeutischen Produkten.

Ein Ausführungsbeispiel der Erfindung ist in den Figuren dargestellt und wird im Weiteren näher erläutert.

Es zeigen:
Figur 1 ein Blockdiagramm, in welchem die allgemeine Organisation einer Chip-Produktionsanlage dargestellt ist;
Figur 2 eine Skizze einer Chip-Produktionsanlage, wobei der komplexe Materialfluss, d.h. der Weg eines Wafers/Loses durch die Chip-Produktionsanlage und die damit vorhandenen komplexen Prozessschritte dargestellt ist;
Figur 3 ein Blockdiagramm, in dem der Prozessdatenfluss bei dem Herstellen eines Wafers/Loses dargestellt ist; und
Figur 4 eine Verteilung von Werten eines Prozessparameters, welcher bei einer statistischen Analyse als Auswahlkriterium herangezogen wird.

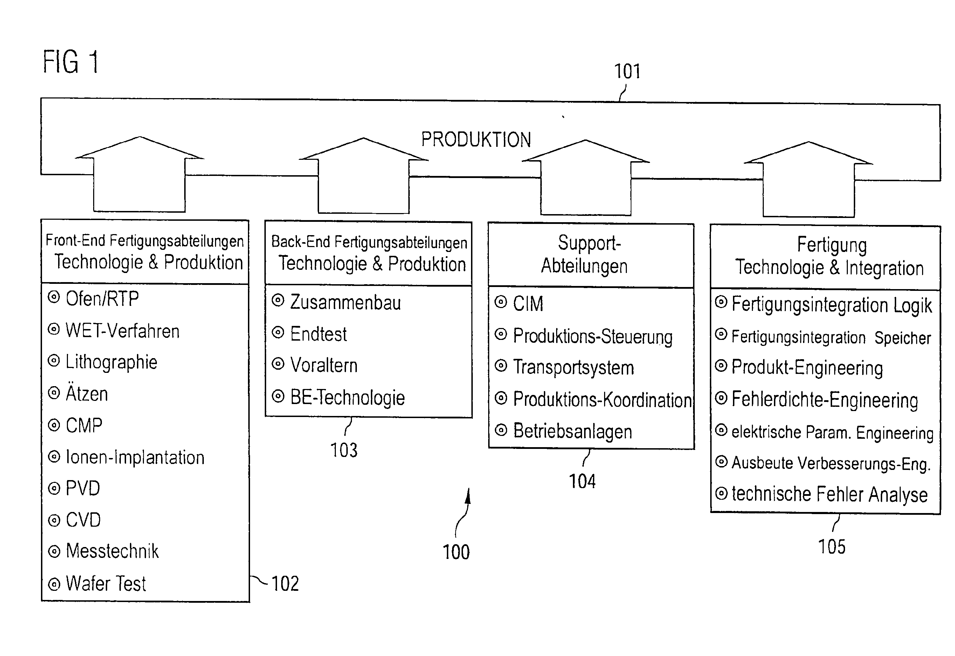

Einleitend wird in Fig. 1 in einem Blockdiagramm 100 schematisch die Organisation und der Aufbau einer Halbleiterchip-Produktionsanlage, für welche ein erfindungsgemäßes Verfahren zum Überwachen eines Herstellungsprozesses einer Mehrzahl von Wafern verwendet werden kann, erläutert.

Der gesamte Herstellungsprozess, in Fig. 1 mit einem ersten Block 101 bezeichnet, wird beispielhaft in vier Produktionsbereiche 102, 103, 104, 105 gruppiert,
einen ersten Bereich, in den die Front-End-Prozesse der Chip-Fertigung gruppiert werden (Block 102),
einen zweiten Bereich des Herstellungsprozesses, in den die Back-End-Prozesse gruppiert werden (Block 103),
einen dritten Bereich des Herstellungsprozesses, der den Support betrifft, das heißt die Unterstützung der einzelnen Herstellungsprozesse (Block 104),
ein vierter Bereich der die Prozesstechnologie und die Prozessintegration betrifft (Block 105).

Bei den Front-End-Prozessen 102 sind insbesondere folgende Prozesstechnologien sowie die für die Durchführung der entsprechenden Prozesse eingerichteten Vorrichtungen vorgesehen:
Ein Ofen zum Erhitzen des jeweiligen zu prozessierenden Wafers, eine Vorrichtung zum Durchführen eines Kurzzeit-Temperverfahrens (Rapid Thermal Processing, RTP),
eine Vorrichtung zum Ätzen des Wafers, beispielsweise zum Nassätzen oder zum Trockenätzen,
eine Vorrichtung zum Reinigen, beispielsweise Waschen des Wafers,
einer Vorrichtung zur Durchführung unterschiedlicher Lithographieschritte,
einer Vorrichtung zum chemisch-mechanischen Polieren (Chemical Mechanical Polishing, CMP),
eine Einrichtung zur Durchführung einer Ionen-Implantation in vorgegebenen Bereichen des Wafers bzw. des jeweils zu fertigenden Chips,
Vorrichtungen zum Aufbringen von Materialien auf dem Wafer, beispielsweise Vorrichtungen zum Abscheiden von Materialien aus der Gasphase, das heißt beispielsweise Vorrichtungen zum Durchführen von Physical Vapour Deposition (PVD) oder Chemical Vapour Deposition (CDV), oder eine Vorrichtung zum epitaktischen Aufwachsen von Material auf einem Substrat, Metrologie-Vorrichtungen, d.h. Messvorrichtungen,
Vorrichtungen zum Durchführen von Tests auf den jeweiligen Wafern.

Die Back-End-Prozesse betreffen insbesondere folgende Bereiche:
Den Zusammenbau der Chips in Gehäuse,
den Endtest des gefertigten und gehäusten Chips,
das Einbringen von Informationen, beispielsweise Produktinformation, in oder an das Gehäuse des jeweiligen Chips, sowie
allgemein die im Bereich des Back-Ends für gehäuste und ungehäuste Chip eingesetzten Technologien.

Der Support, das heißt die Prozessunterstützung betrifft insbesondere folgende Bereiche:
CIM,
Prozessüberwachung,
ein Transportsystem zur Auslieferung der gefertigten Halbleiterchips,
eine Koordination der Produktion,
die Unterstützung der jeweiligen Fertigungsstandorte.

Die Prozesstechnologie und die Prozessintegration betrifft insbesondere
die Prozessintegration von Logikbausteinen,
die Prozessintegration von Speicherbausteinen,
das Produkt-Engineering,
das Überwachen und Verbessern von Fehlerdichten bei der Herstellung,
das Überwachen elektrischer Parameter bei den hergestellten Produkten,
die Verbesserung der Ausbeute der hergestellten Chips,
eine physikalische Fehleranalyse.

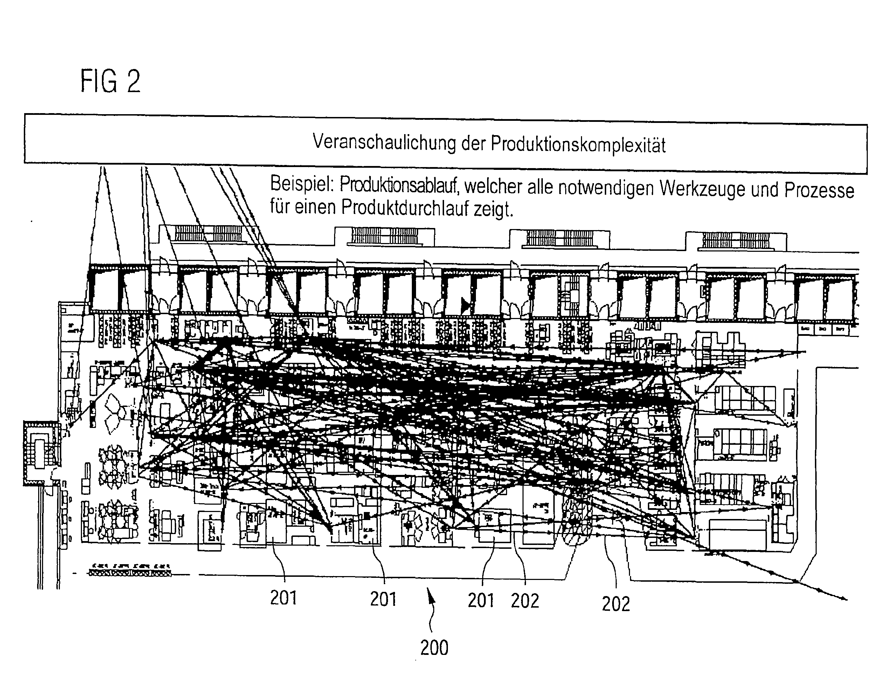

**Fig. 2** zeigt eine Halbleiterchip-Produktionsanlage, anders ausgedrückt eine Halbleiterchip-Fabrik 200 mit einer Vielzahl von Halbleiterchip-Teil-Produktionsanlagen 201, welche eingesetzt werden zur Bearbeitung von Rohmaterialien, beispielsweise eines Siliziumwafers oder eines Wafers aus anderen Halbleiter-Materialien (Germanium, Gallium-Arsenid, Indium-Phosphid, etc.), um aus den Rohmaterialien Halbleiterchips zu fertigen.

Ein üblicher Herstellungsprozess zur Herstellung eines Halbleiterchips weist Hunderte von unterschiedlichen Prozessschritten auf, bei denen in unterschiedlicher Reihenfolge Lithographieschritte, Ätzschritte, CMP-Schritte, Schritte des Aufbringens von Materialien auf dem jeweiligen zu prozessierenden Wafer, oder auch Dotierungs- oder Implantationsschritte von Dotierungsatomen in den zu prozessierenden Wafer durchgeführt werden. Bei all diesem Prozessschritten werden Werte von Prozessparametern aufgenommen, welche einer späteren statistischen Analyse unterworfen werden können.

Somit ergeben sich die in Fig. 2 durch Linien 202 dargestellten Wege, welche den Weg eines Wafers oder eines Loses durch die Halbleiterchip-Produktionsanlage 200 darstellen. In der Halbleiterchip-Produktionsanlage 200 ist eine Vielzahl von Sensoren, welche den jeweiligen Teil-Produktionsanlagen 201 zugeordnet sind und eine noch größere Menge von Prozessdaten (Rohdaten) werden aufgenommen, welche jeweils von den Sensoren erfasst werden und, wie im Weiteren näher erläutert wird, verarbeitet werden. Ein jeweiliger Sensor kann in eine jeweilige Maschine integriert sein (integrierter Sensor) oder separat an eine jeweilige Maschine angebaut sein (externer Sensor).

Im Weiteren werden die Teil-Produktionsanlagen 201 auch als Maschinen 201 bezeichnet.

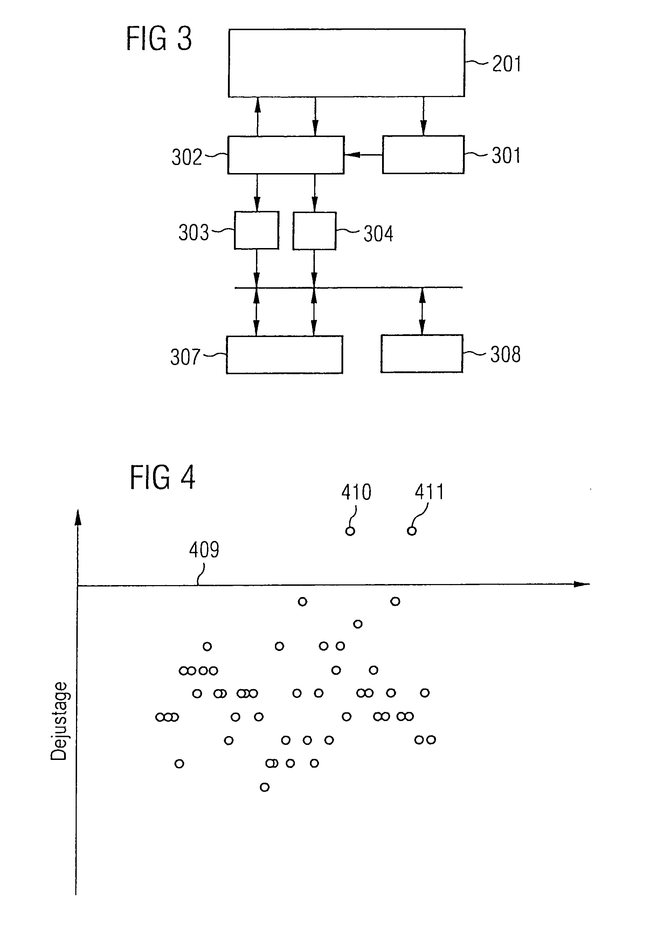

**Fig.3** zeigt beispielhaft den Datenfluss für Prozessdaten, welche an einer Maschine 201 mittels eines integrierten oder mittels eines externen Sensors 301. Jeder Sensor 301, wobei eine beliebige Anzahl integrierter und/oder externer Sensoren vorgesehen sein können, erfasst die jeweils für ihn vorgegebenen Parameter der Maschine 201, beispielsweise physikalische oder chemische Zustände in einer Prozesskammer, die Position eines Roboterarms, etc. Beispiele für Prozessparameter bei der Herstellung eines Wafers sind zum Beispiel die Dejustierung, d.h. die PositionierungsUngenauigkeit, innerhalb eines Positionierungsschrittes, Temperatur während eines Prozessschrittes, Gasfluss während eines Prozessschrittes, Zeitdauer eines Prozessschrittes oder der Druck während eines Prozessschrittes.

Der Sensor 301 ist über eine SECS-Schnittstelle 302, die eingerichtet ist zur Datenkommunikation gemäß den SECS-Standards mit einem lokalen Kommunikationsnetz (Local Area Network, LAN) 306 gekoppelt.

Gemäß den SECS-Standards werden von dem Sensor 301 und der SECS-Schnittstelle 302 Dateien gemäß dem PDSF-Format (Process Data Standard Format) erzeugt, im Weiteren auch bezeichnet als PDSF-Dateien 303 sowie Protokolldateien 304, wobei die PDSF-Dateien 303 und die Protokolldateien 304 als Daten in einem Speicher 307 gespeichert werden.

Die PDSF-Dateien 303 enthalten z.B. analoge Daten von unterschiedlichen Kanälen, das heißt von unterschiedlichen internen (d.h. integrierten) und/oder externen Sensoren 301, welche an einer Maschine 201 angebracht sein können. Die erzeugten Prozessdaten werden in dem Speicher 307 gespeichert.

Die Speicher 307 speichert die Prozessdaten so, dass sie nach Fertigstellung der Wafer den Wafern zugeordnet werden können, und stellt die Prozessdaten einer späteren statistischen Analyse zur Verfügung. Die statistische Analyse wird mittels einer Auswerteeinheit 308 durchgeführt. Die statistische Analyse der Auswerteeinheit 308 dient dazu ein Auswahlkriterium bereitzustellen, mittels dessen Wafer eines Loses, welche einen FDC-Fehler aufweisen, nicht als Stichprobe für eine nachfolgende SPC-Messung dienen, sondern vor einer weiteren Prozessierung einer Sonderbehandlung unterzogen werden.

In **Fig. 4** ist eine Verteilung der Werte eines Prozessparameters dargestellt, welcher in dem Herstellungsprozess eines Wafers aufgenommen wurden. Diese Werte werden mittels eines FDC-Verfahrens erhalten. Als Beispiel wurde ein Prozessparameter gewählt, welcher die Dejustage oder das so genannte Alignment, d.h. die Abweichung in X- und/oder Y-Richtung von einer Sollposition des Wafers, welche Sollposition er bei der Prozessierung einnehmen soll. Die dargestellten Prozessdaten sind On-Line Prozessdaten eines Loses in der Lithographie. Die Prozessdaten werden beim Herstellungsprozess von einer Belichtungsmaschine erfasst und mittels eines LAN-Netzes übermittelt. Die in Fig. 4 zu sehende Streuung der Werte des Prozessparameters zeigt die natürliche Prozessstreuung, d.h. die Streuung der Justagequalität der Wafer, an.

Der Wert der Dejustage wird als Prozessparameter wie oben beschrieben für jeden Wafer bestimmt. Er steht also ohne weitere zeit- und kostenaufwendige Messung zur Verfügung. Mittels einer statistischen Analyse wird die Verteilung der Werte der Dejustage aller Wafer eines Loses erstellt, welches mittels einer Qualitätsüberwachungsprüfung charakterisiert werden soll.

Im Ausführungsbeispiel werden in der statistischen Analyse die Dejustagewerte (Prozessparameter) aller Wafer in ein Diagramm eingetragen. Somit ergibt sich ein zweidimensionales Histogramm, in welchem die Dejustagewerte der Wafer gegen die Wafernummern aufgetragen sind. Weiter wird mittels der statistischen Analyse für den Fall eines relativen Grenzwertes, d.h. ein Grenzwert, welcher sich auf den Mittelwert bzw. den Median des untersuchten Prozessparameters der Wafer des Loses bezieht, der Mittelwert bzw. Median des Prozessparameters aller Wafer des Loses berechnet und ebenfalls in die zweidimensionale Verteilung eingetragen. Anhand dieser zweidimensionalen Verteilung und dem entsprechenden Grenzwert lässt sich nun mittels der Analyse untersuchen, welche Wafer einen Grenzwert der Dejustage überschreiten und welche nicht. Im Falle eines absoluten Grenzwertes kann in der statistischen Analyse die Berechnung des Mittelwertes oder des Medians unterbleiben.

In Fig. 4 sind die Werte aus dem FDC-Verfahren für ein Los aus 50 Wafern eingetragen. Zusätzlich ist in Fig. 4 ein Grenzwert 409 eingezeichnet, welcher von dem für einen Wafer gemessenen Dejustagewert nicht überschritten werden darf. Erfindungsgemäß kann der Schwellenwert entweder ein relativer Schwellenwert (Grenzwert) sein, d.h. ein Schwellenwert (Grenzwert), welcher angibt um wie viel Prozent ein vorgegebener Sollwert eines Prozessparameters über- oder unterschritten werden darf, oder ein absoluter Schwellenwert sein, d.h. ein Schwellenwert, welcher für den entsprechenden Prozessparameter nicht überoder unterschritten werden darf. Der relative Schwellenwert kann auch bezüglich des Medians oder des Mittelwertes der Verteilung vorgegeben werden. Mittels der Analyse werden dann Wafer bestimmt, welche vorgegebene Schwellenwerte unter- oder überschreiten. Im Beispiel der Dejustage werden mittels der Analyse untersucht, welche Wafer den Grenzwert 409 überschreiten. In Fig. 4 überschreiten die Wafer 410 und 411 den entsprechenden Grenzwert 409 der Dejustage. Diese beiden Wafer werden dann derart gekennzeichnet, dass sie als Wafer kenntlich sind, welche einer Sondermessung zugeführt werden müssen und welche nicht einer SPC-Messung zum Bestimmen der durchschnittlichen Produktqualität unterzogen werden dürfen. Sie werden somit dem normalen weiteren Herstellungsverfahren entzogen. In dem Ausführungsbeispiel ist somit sichergestellt, dass ein Wafer, bei dessen Herstellung ein FDC-Fehler aufgetreten ist, nicht als Stichprobe für eine SPC-Messung dienen kann. Dies muss ausgeschlossen werden, da der betreffende Wafer nicht für das Los bzw. das Herstellungsverfahren repräsentativ ist.

Somit kann die so ermittelte durchschnittliche Produktqualität nicht mittels dieses Ausreißers beeinflusst werden. Andererseits werden die gekennzeichneten Wafer im Messkonzept einer Sondermessung unterworfen, um zu untersuchen, ob sie trotz des FDC-Fehlers einem Qualitätskriterium entsprechen oder nicht. Je nach Ergebnis dieser Sondermessung werden die gekennzeichneten Wafer entweder verworfen, nachgearbeitet oder, wenn sich mittels der Sondermessung herausstellt, dass der FDC-Fehler keinen Einfluss auf die Waferqualität hatte, ohne zusätzliche Schritte wieder in den üblichen Herstellungsprozess eingegliedert.

Unter einer Sondermessung im Zusammenhang mit der Qualitätsüberwachung von Wafern wird verstanden, dass die Wafer, welche einer Sondermessung unterzogen werden, einer Testmessung unterzogen werden, welche die tatsächliche Qualität des Wafers bestimmt. Das Auftreten eines FDC-Fehlers allein führt in einem Herstellungsprozess nicht unbedingt dazu, dass der Wafer nicht den Qualitätskriterien genügt. Auch Wafer, bei deren Herstellung FDC-Fehler aufgetreten sind, können den Qualitätskriterien genügen. Jedoch ist bei Wafern bei deren Herstellung ein FDC-Fehler auftrat die Gefahr gegeben, dass sie den Qualitätskriterien nicht genügen. Um zu verhindern, dass diese möglicherweise schadhaften Wafer weiter ohne Überprüfung im Herstellungsprozess verbleiben, wird die Sondermessung, d.h. Testmessung, zur Produktqualitätsbestimmung durchgeführt,

Gemäß dem Ausführungsbeispiel wird eine Stichprobenauswahl für das SPC-Verfahren bei Auftreten eines FDC-Fehlers folgendermaßen beeinflusst. Erstens darf ein Wafer eines Loses, bei welchem Wafer ein FDC-Fehler aufgetreten ist, die Messoperationen eines Messkonzeptes nicht umgehen, sondern wird zu einer Sondermessung angemeldet, auch wenn aus diesem Los eine Stichprobe einer SPC-Messung unterzogen werden soll. Zweitens wird, wenn von dem Los eine Stichprobe zur SPC-Messung angemeldet werden soll, nicht ein Wafer ausgewählt, bei dessen Herstellung ein FDC-Fehler aufgetreten ist, sondern die Wafer bei denen ein FDC-Fehler aufgetreten ist, werden zu Sondermessungen angemeldet und es wird ein Wafer für die SPC-Messung ausgewählt, bei dessen Herstellung kein FDC-Fehler aufgetreten ist.

Somit ist sichergestellt, dass zum Bestimmen der durchschnittlichen Qualität der Wafer und des Herstellungsprozesses ein repräsentativer Wafer ausgewählt wird, d.h. das Los und das Herstellungsverfahren werden korrekt charakterisiert, wohingegen Wafer bei deren Herstellung ein FDC-Fehler aufgetreten ist nicht ohne eine Sondermessung im normalen Herstellungsprozess verbleiben.

Anhand des Ergebnisses der Sondermessung, d.h. der Testmessung zum Bestimmen der Qualität des Wafers, wird entschieden wie der betreffende Wafer weiter prozessiert wird. Wenn sich herausstellt, dass der FDC-Fehler keinen Einfluss auf die Qualität des Wafers hat, wird er wieder in den normalen Herstellungsprozess eingegliedert. Wenn festgestellt wird, dass der FDC-Fehler Auswirkungen auf die Qualität des Wafers hatte, wird entschieden, ob der Wafer nach einer Nacharbeitung wieder in den normalen Herstellungsprozess eingegliedert werden kann, oder ob eine Nachbearbeitung nicht möglich oder angebracht ist und der Wafer als schadhaft ausgesondert wird.

Zusammenfassend schafft die Erfindung ein Verfahren und eine Vorrichtung zum Überwachen der Produktionsqualität (Qualitätsmanagement) eines physikalischen Objektes in einem Herstellungsprozess, bei dem FDC-Verfahren und ein allgemeines Messkonzept, welches SPC-Messungen und Sondermessungen beinhaltet, zu einem integralen Konzept verknüpft. Hierdurch wird die Fehleranfälligkeit des Qualitätsmanagements verringert. Das Messkonzept reagiert mittels eines Regelwerkes, d.h. einer Ansammlung verschiedener Regeln, automatisch auf Informationen des FDC-Verfahrens, ohne dass ein Kontrollvorarbeiter oder Ingenieur Einfluss nehmen muss. Die Überwachung der Produktionsqualität wird somit verbessert.

In diesem Dokument ist folgendes Dokument zitiert:
[1] DE 198 47 631 A1

### Bezugszeichenliste

- 100: schematisches Blockdiagramm eines Aufbaus einer Halbleiter-Produktionsanlage
- 101: Block eines gesamten Herstellungsprozesses
- 102: Block eines ersten Produktionsbereiches
- 103: Block eines zweiten Produktionsbereiches
- 104: Block eines dritten Produktionsbereiches
- 105: Block eines vierten Produktionsbereiches
- 200: Halbleiterchip-Produktionsanlage
- 201: Vielzahl von Halbleiterchip-Teil-Produktionsanlagen
- 202: Weg eines Wafers oder Loses durch die Halbleiterchip-Produktionsanlage
- 201: Maschine
- 301: Sensor
- 302: SECS-Schnittstelle
- 303: PDSF-Datei
- 304: Protokolldatei
- 306: lokales Kommunikationsnetz (LAN)
- 307: Speicher
- 308: Auswerteeinheit
- 409: Grenzwert des Dejustagewerts
- 410: Wafer der den Grenzwert überschreitet (FDC-Fehler)
- 411: Wafer der den Grenzwert überschreitet (FDC-Fehler)

## Patentansprüche

1. Verfahren zum Überwachen eines Herstellungsprozesses einer Mehrzahl von physikalischen Objekten,
bei dem eine Analyse unter Verwenden von Werten von mindestens einem Prozessparameter des Herstellungsprozesses des physikalischen Objektes vorgenommen wird;
bei dem als Ergebnis der Analyse physikalische Objekte, wenn sie einem vorgegebenen Auswahlkriterium nicht genügen, derart **gekennzeichnet** werden, dass die zugehörigen physikalischen Objekte einer Sondermessung zuzuführen sind.

2. Verfahren gemäß Anspruch 1, bei dem das physikalische Objekt ein Wafer ist.

3. Verfahren gemäß Anspruch 1 oder 2, bei dem die Analyse eine statistische Analyse ist.

4. Verfahren gemäß einem der Ansprüche 1 bis 3, bei dem die Werte des mindestens einen Prozessparameters beim Herstellen des physikalischen Objektes gemessen werden.

5. Verfahren gemäß einem der Ansprüche 1 bis 4, bei dem mindestens ein **gekennzeichnetes** physikalisches Objekt einer Sondermessung unterzogen wird.

6. Verfahren gemäß Anspruch 5, bei dem die Sondermessung eine Messung zum Überprüfen der Qualität des **gekennzeichneten** physikalischen Objektes ist.

7. Verfahren gemäß einem der Ansprüche 1 bis 6, bei dem die nicht **gekennzeichneten** physikalischen Objekte gemäß dem Herstellungsprozess weiterbehandelt werden.

8. Verfahren gemäß einem der Ansprüche 1 bis 7, bei dem das Auswahlkriterium ein Qualitätsmerkmal des Herstellungsprozesses ist.

9. Verfahren gemäß einem der Ansprüche 1 bis 8, bei dem das nicht Genügen des Auswahlkriterium dann erfüllt ist, wenn ein Wert des mindestens einen Prozessparameters einen vorgegebenen Grenzwert über- oder unterschreitet.

10. Vorrichtung zum Überwachen eines Herstellungsprozesses einer Mehrzahl von physikalischen Objekten mit einem Prozessor, der derart eingerichtet ist, dass folgende Verfahrensschritte durchführbar sind:
Vornehmen einer Analyse unter Verwenden von Werten von mindestens einem Prozessparameter des Herstellungsprozesses des physikalischen Objektes;
Kennzeichnen von physikalischen Objekten, wenn auf ein Ergebnis der Analyse hin ein vorgegebenes Auswahlkriterium nicht erfüllt wird, so dass die zugehörigen physikalischen Objekte Sonderbehandlungen zuzuführen sind.

11. Computerlesbares Speichermedium, in dem ein Programm zum Überwachen eines Herstellungsprozesses einer Mehrzahl von physikalischen Objekten gespeichert ist, das, wenn es von einem Prozessor ausgeführt wird, folgende Verfahrensschritte aufweist:
Vornehmen einer Analyse unter Verwenden von Werten von mindestens einem Prozessparameter des Herstellungsprozesses des physikalischen Objektes;
Kennzeichnen von physikalischen Objekten, wenn auf ein Ergebnis der Analyse hin ein vorgegebenes Auswahlkriterium nicht erfüllt wird, so dass die zugehörigen physikalischen Objekte Sonderbehandlungen zuzuführen sind.

12. Computerprogramm-Element zum Überwachen eines Herstellungsprozesses einer Mehrzahl von physikalischen Objekten, das, wenn es von einem Prozessor ausgeführt wird, folgende Verfahrensschritte aufweist:
Vornehmen einer Analyse unter Verwenden von Werten von mindestens einem Prozessparameter des Herstellungsprozesses des physikalischen Objektes;
Kennzeichnen von physikalischen Objekten, wenn auf ein Ergebnis der Analyse hin ein vorgegebenes Auswahlkriterium nicht erfüllt wird, so dass die zugehörigen physikalischen Objekte Sonderbehandlungen zuzuführen sind.
